(19) Europäisches Patentamt
European Patent Office
Office européen des brevets

(11) **EP 3 619 005 B1**

(12) **FASCICULE DE BREVET EUROPEEN**

(45) Date de publication et mention de la délivrance du brevet:
**23.06.2021 Bulletin 2021/25**

(21) Numéro de dépôt: **18720301.3**

(22) Date de dépôt: **04.05.2018**

(51) Int Cl.:
*B25J 15/00* (2006.01)  *B29D 30/30* (2006.01)
*B29D 30/58* (2006.01)  *B65H 3/22* (2006.01)
*B29D 30/44* (2006.01)  *B65H 5/10* (2006.01)
*B65H 5/14* (2006.01)  *B65H 5/16* (2006.01)

(86) Numéro de dépôt international:
**PCT/EP2018/061570**

(87) Numéro de publication internationale:
**WO 2018/202879 (08.11.2018 Gazette 2018/45)**

(54) **DISPOSITIF AUTOMATISÉ DE PRÉHENSION ET DE MANUTENTION D'UNE BANDE DE ROULEMENT POUR UN PNEUMATIQUE**

AUTOMATISIERTE VORRICHTUNG ZUM GREIFEN UND HANDHABEN EINER LAUFFLÄCHE FÜR EINEN REIFEN

AUTOMATED DEVICE FOR GRIPPING AND HANDLING A TREAD FOR A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.05.2017 FR 1754013**

(43) Date de publication de la demande:
**11.03.2020 Bulletin 2020/11**

(73) Titulaire: **Compagnie Générale des Etablissements Michelin**
**63000 Clermont-Ferrand (FR)**

(72) Inventeur: **DUBOIS, Clément**
**63040 Clermont Ferrand Cedex 9 (FR)**

(74) Mandataire: **Roussy, Delphine**
**M. F. P. MICHELIN**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
**EP-A1- 2 931 509      WO-A1-2006/015896**
**WO-A1-2007/138374      FR-A1- 2 508 016**
**US-A- 5 669 602      US-A- 5 935 377**
**US-A1- 2003 070 742**

EP 3 619 005 B1

**Description**

DOMAINE TECHNIQUE GENERAL

L'invention se situe dans le domaine de la fabrication de pneumatiques pour véhicules.

La présente invention concerne plus précisément un dispositif automatisé de préhension et de manutention d'une bande de roulement pour un pneumatique.

L'invention concerne également une installation de déplacement d'une bande de roulement pour un pneumatique, munie dudit dispositif.

ETAT DE L'ART

Un pneumatique pour la roue d'un véhicule comprend généralement une bande de roulement, rajoutée sur sa surface extérieure, avant la vulcanisation de celui-ci.

Cette bande de roulement se présente sous la forme d'une bande d'un mélange caoutchouteux cru, c'est-à-dire qui n'a pas été encore cuit. Elle intègre une pluralité de sillons longitudinaux, c'est-à-dire des rainures qui s'étendent selon toute sa longueur et sur une certaine profondeur depuis sa surface extérieure et qui déterminent ainsi un profil donné de la bande de roulement du futur pneu. En d'autres termes, le "profil" de la bande de roulement correspond à son contour en section transversale.

La bande de roulement est fabriquée sous forme d'une bande continue, stockée en bobines. Ensuite, cette bande continue est déroulée depuis la bobine de stockage, découpée selon la longueur appropriée pour entourer la circonférence du pneumatique, puis déplacée et positionnée sur une forme cylindrique, (qui peut être soit une ébauche de pneumatique, soit un tambour cylindrique de stockage temporaire avant la pose sur l'ébauche). Enfin, les deux extrémités de la bande de roulement sont aboutées avec précision.

Dans l'état de la technique, la manipulation de la bande de roulement entre la sortie de l'outil de coupe et la forme cylindrique s'effectue manuellement.

Or, il serait souhaitable de disposer d'un dispositif automatisé pour le faire.

On connaît déjà d'après le document WO 2007/138374, un dispositif de préhension et de manutention d'une bande de roulement pour un pneumatique, qui comprend un module de piquage de cette bande et des moyens de déplacement vertical et horizontal dudit module.

On connaît également d'après le document EP 2 931 509 correspondant au WO 2014/090983, un dispositif de transport d'une nappe de renfort carcasse, utilisé dans un procédé de fabrication d'ébauche de pneumatique. Ce dispositif comprend un module de préhension à ventouses.

Aucun des dispositifs décrits dans ces documents ne permet toutefois d'optimiser la préhension de la bande de roulement ou de renfort en termes de modularité et de sécurité.

PRESENTATION DE L'INVENTION

Un objectif de l'invention est donc de proposer un dispositif automatisé de préhension et de manutention, qui permette de transporter automatiquement une bande de roulement depuis la sortie de l'outil de coupe, vers la forme cylindrique, tout en la maintenant en tension, c'est-à-dire légèrement étirée pour empêcher sa rétractation.

Un autre objectif de l'invention est que ce dispositif n'endommage pas la bande de roulement pendant son déplacement et qu'il puisse fonctionner avec des bandes de roulement présentant des profils différents.

A cet effet, l'invention concerne un dispositif automatisé de préhension et de manutention d'une bande de roulement pour un pneumatique.

Conformément à l'invention, ce dispositif comprend au moins un module de piquage de ladite bande de roulement,

- des moyens de déplacement vertical dudit module de piquage,
- des moyens de déplacement horizontal selon une direction de déplacement horizontal linéaire dudit module de piquage,

et ledit module de piquage comprend un châssis muni d'au moins un ensemble de piquage mobile et d'au moins un ensemble de piquage fixe,

ledit ensemble de piquage fixe comprenant une surface de butée, horizontale, plane, ménagée à la base dudit châssis, et depuis laquelle au moins deux piques font saillie vers le bas,

ledit ensemble de piquage mobile comprenant :

- au moins une plaquette de piquage munie à sa base d'au moins une surface de contact horizontale plane, depuis laquelle au moins deux piques font saillie, cette plaquette de piquage étant disposée à l'intérieur d'un espace de guidage vertical ménagé dans ledit châssis, de façon que ses piques fassent saillie vers le bas, et cette plaquette étant mobile librement verticalement dans cet espace sur une course limitée,
- un dispositif de déplacement vertical de ladite plaquette du haut vers le bas à l'intérieur dudit espace de guidage vertical, et
- un dispositif de verrouillage de la position en altitude de ladite plaquette à l'intérieur dudit espace de guidage vertical.

Grâce à ces caractéristiques de l'invention, il est possible de piquer efficacement la bande de roulement, de la maintenir en tension sans l'abîmer et de la transporter, les plaquettes de piquage mobile permettant d'adapter le dispositif à des bandes de roulement présentant des profils différents.

Selon d'autres caractéristiques avantageuses et non limitatives de l'invention, prises seules ou en combinaison :

- ledit module de piquage comprend sur un même châssis, un ensemble de piquage fixe au centre et deux ensembles de piquage mobile, disposés de part et d'autre ;
- chaque plaquette de piquage comprend deux piques dites "avant" et "arrière", séparées l'une de l'autre par ladite surface de contact, les sommets de ces deux piques étant espacés d'un pas, dit « troisième pas » ;
- l'ensemble de piquage mobile comprend au moins deux plaquettes de piquage mobiles, disposées parallèlement et de sorte que l'axe joignant les sommets des deux piques avant et arrière de chaque plaquette soit parallèle à ladite direction de déplacement horizontal dudit module de piquage et de sorte que les sommets des piques avant des différentes plaquettes soient alignés le long d'un axe perpendiculaire à la dite direction de déplacement du module et que le sommet de la pique avant d'une plaquette soit espacé du sommet de la pique avant de la plaquette voisine d'un pas dit « quatrième pas » ;
- ladite plaquette de piquage mobile comprend au moins une butée de limitation de sa course dans ses deux sens de déplacement vertical ;

ledit dispositif de déplacement vertical de ladite plaquette du haut vers le bas comprend :

- un manchon gonflable,
- un alésage de réception dudit manchon gonflable, ménagé dans une partie supérieure dudit châssis, cet alésage présentant à sa base, une fente horizontale qui s'étend perpendiculairement à ladite direction de déplacement horizontal du module de piquage, cette fente débouchant en haut dudit espace de guidage vertical, et ce dernier étant ménagé dans une partie inférieure dudit châssis,
- un dispositif de gonflage dudit manchon, configuré pour pouvoir être relié à une source d'alimentation en air comprimé, ladite plaquette de piquage mobile étant disposée à l'intérieur de l'espace de guidage vertical, de façon que son extrémité supérieure repose contre le manchon gonflable lorsqu'elle est en position basse et de façon que son extrémité supérieure déforme ledit manchon gonflable lorsqu'elle est à une altitude supérieure à ladite position basse, ledit manchon gonflable tendant à repousser ladite plaquette vers le bas lorsqu'il est gonflé ;
- ledit châssis comprend dans sa partie inférieure, un logement, qui présente en section transversale selon un plan parallèle à ladite direction de déplacement horizontal du module de piquage, une forme de croix, qu'il est muni d'une branche horizontale et d'une branche verticale, cette dernière débouchant sur la surface inférieure du châssis, ladite plaquette de piquage est également en forme de croix, de sorte qu'elle comprend une plaque munie de deux bras, ladite plaquette de piquage est disposée dans ledit logement de façon que la plaque puisse coulisser dans la branche verticale et chacun de ses bras dans l'une des branches horizontales, les deux bras constituant des butées de limitation de la course de ladite plaquette et des garnitures sont disposées dans la branche horizontale parallèlement les unes aux autres et dans un plan parallèle à celui de ladite direction de déplacement horizontal du module de piquage, chaque plaquette de piquage étant intercalée entre deux de ces garnitures, le logement délimitant avec deux garnitures voisines, ledit espace de guidage vertical de la plaquette de piquage ;

- le haut de ladite branche verticale du logement en croix débouche dans la fente de l'alésage de réception du manchon gonflable ;
- ledit dispositif de verrouillage de la position en altitude de ladite plaquette comprend un vérin de poussée exerçant une poussée axiale selon une direction horizontale perpendiculaire à ladite direction de déplacement horizontale du module de piquage, de façon à serrer ensemble les unes contre les autres lesdites garnitures et ladite au moins une plaquette mobile et à empêcher le déplacement vertical de ladite plaquette de piquage, lorsque le vérin de poussée est activé ;
- il comprend trois modules de piquage disposés parallèlement les uns aux autres de façon que leurs axes longitudinaux respectifs soient perpendiculaires à la direction de déplacement horizontal du module de piquage.

L'invention concerne également une installation de déplacement d'une bande de roulement pour un pneumatique.

Conformément à l'invention, cette installation comprend :

- un élément de guidage en translation linéaire,
- un dispositif automatisé de préhension et de manutention d'une bande de roulement pour un pneumatique tel que précité, dont les moyens de déplacement horizontal permettent de déplacer ledit module de piquage le long dudit élément de guidage en translation linéaire,
- un tapis de déplacement linéaire de ladite bande de roulement, disposé sous ledit dispositif automatisé de préhension et de manutention, ce tapis permettant le déplacement de la bande de roulement selon une direction horizontale parallèle à ladite direction de déplacement horizontal dudit module de piquage

De façon avantageuse, l'installation comprend en outre une forme de pose apte à recevoir ladite bande de roulement à la sortie dudit tapis de déplacement.

PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :

- la figure 1 est un schéma représentant un mode de réalisation de l'installation de déplacement d'une bande de roulement conforme à l'invention,
- la figure 2 est une vue en perspective, éclatée, du dispositif automatisé de préhension et de manutention d'une bande de roulement pour un pneumatique conforme à l'invention,
- la figure 3 est une vue en perspective de ce même dispositif, vue selon un autre angle,
- la figure 4 est une vue en perspective et assemblée d'une plaquette de piquage,
- la figure 5 est une vue de détail et en coupe d'une extrémité d'un module de piquage,
- la figure 6 est une vue de détail d'une partie du dispositif de la figure 3, représentant un ensemble de piquage fixe et une partie d'un ensemble de piquage mobile,
- la figure 7 est une vue en perspective du châssis de l'un des modules de piquage du dispositif de la figure 3,
- les figures 8 et 9 sont des vues en coupe transversale du module de piquage, prises selon les plans de coupe schématisés respectivement par les lignes VIII-VIII et IX-IX représentées sur les figures 5 et 10.
- les figures 10 à 13 sont des vues en coupe longitudinales d'un module de piquage du dispositif conforme à l'invention, représentant les différentes étapes de fonctionnement de ce module.

DESCRIPTION DETAILLEE

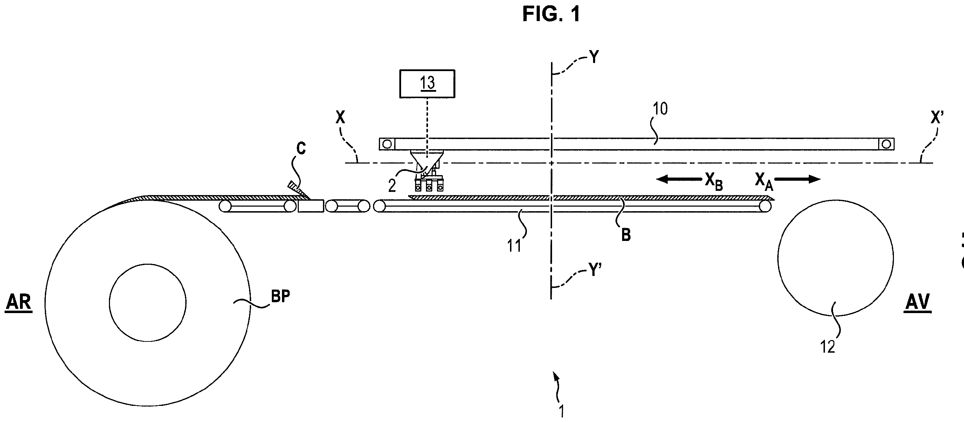

En se reportant à la figure 1, on peut voir un exemple de réalisation d'une installation 1 de déplacement d'une bande de roulement B pour un pneumatique.

Cette installation 1 comprend :

- un élément 10 de guidage en translation linéaire, tel qu'un rail de guidage,
- un dispositif 2 automatisé de préhension et de manutention d'une bande de roulement B pour un pneumatique, conçu pour se déplacer le long dudit élément de guidage 10, selon une direction rectiligne X-X' et ce, dans deux sens opposés Xa, Xb,
- un tapis 11 de déplacement linéaire de ladite bande de roulement B, selon une direction parallèle à la direction X-X'.

Le tapis de déplacement 11 est de préférence un tapis motorisé, comprenant une bande sans fin entraînée à ses deux extrémités par deux rouleaux rotatifs.

De préférence également, cette installation 1 comprend une forme de pose 12 cylindrique, apte à recevoir la bande de roulement B à la sortie du tapis de déplacement 11.

L'installation 1 est alimentée à partir d'une bobine de produit BP, disposée en amont de l'installation 1, un dispositif de coupe C étant intercalé entre la bobine de produit BP et l'installation 1. Ce dispositif de coupe C permet de découper la longueur de bande de roulement B nécessaire, avant de déplacer celle-ci avec l'installation conforme à l'invention.

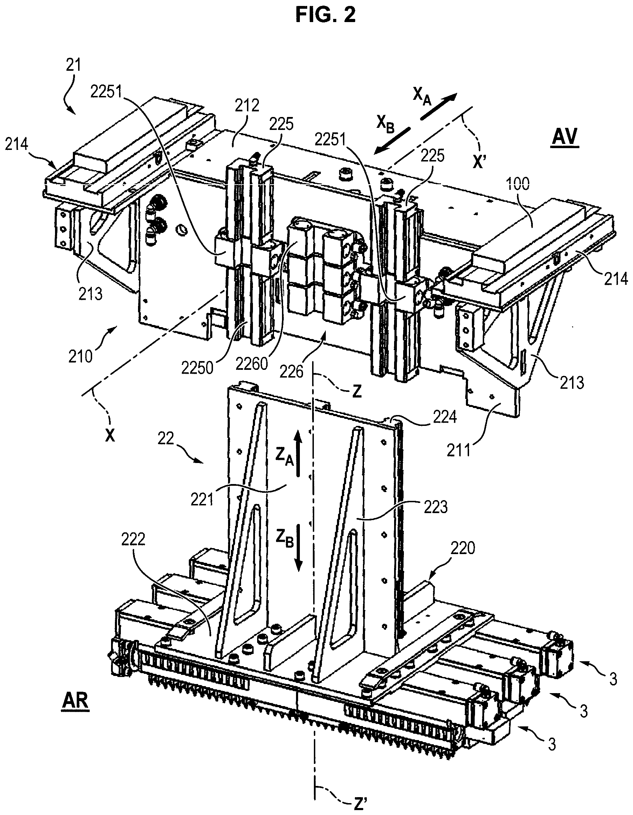

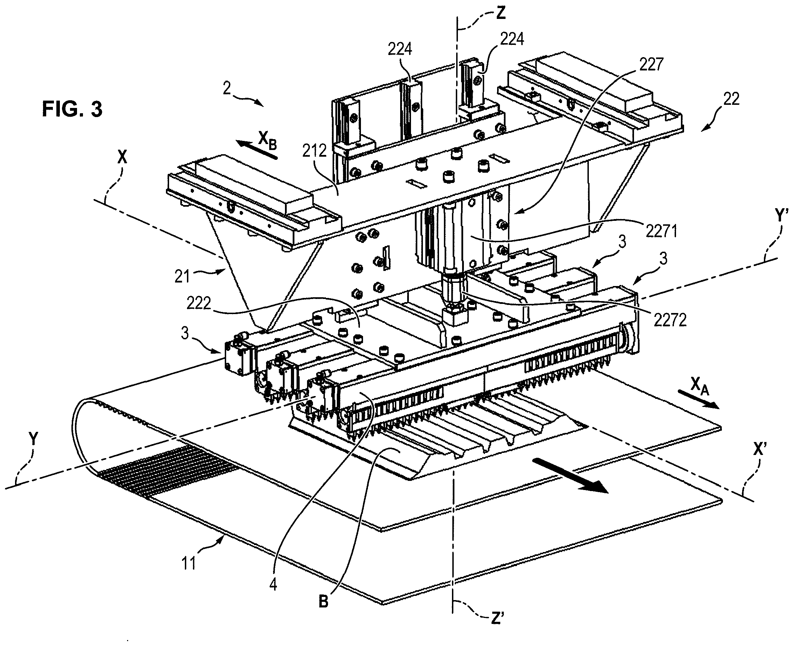

En se reportant aux figures 2 et 3, on peut voir que le dispositif 2 conforme à l'invention comprend des moyens 21 de déplacement horizontal et des moyens 22 de déplacement vertical d'au moins un module de piquage 3. De préférence, et comme représenté sur les figures, ces modules de piquage 3 sont au nombre de trois. Ils sont disposés de préférence parallèlement les uns aux autres, perpendiculairement à la direction d'axe X-X' et les uns derrière les autres.

De préférence, les moyens 21 de déplacement horizontal comprennent un chariot 210 comprenant une plaque verticale 211 et une plaque horizontale 212 assemblées l'une à l'autre perpendiculairement et deux équerres 213, fixées chacune à l'une des deux extrémités de ces plaques, perpendiculairement aux deux plaques 211, 212. Chaque équerre 213 supporte à sa partie supérieure un coulisseau 214 disposé horizontalement et orienté parallèlement à la direction X-X'.

Chaque coulisseau 214 est conçu pour pouvoir coopérer avec un patin 100, représenté seulement partiellement sur les figures 2 et 3. La partie 100 fait partie de l'élément de guidage en translation linéaire 10, il recouvre par exemple la face inférieure du rail de cet élément 10.

Le chariot 210 peut ainsi se déplacer selon la direction de déplacement X-X', soit dans un premier sens $X_A$, dit sens de déplacement vers l'avant AV, c'est-à-dire vers la forme de pose 12 sur la figure 1, soit dans le sens $X_B$, opposé, c'est-à-dire vers l'arrière AR, en direction de la bobine de produit BP sur la figure 1. Ceci permet de déplacer les modules de piquage 3 le long du tapis 11.

Le déplacement de ce chariot 210 est actionné automatiquement par exemple grâce à un système de courroie crantée actionné par un moteur.

De préférence, les moyens 22 de déplacement vertical comprennent un chariot 220 formé d'une plaque verticale 221, perpendiculaire à l'axe X-X', fixée à sa base sur la face supérieure d'une plaque horizontale 222, sensiblement au centre de celle-ci.

Les modules de piquage 3 sont fixés sur la face inférieure de cette plaque horizontale 222.

De façon avantageuse, au moins une équerre 223, ici deux, sont fixées sur la face supérieure de la plaque horizontale 222 et sur la face arrière de la plaque verticale 221. Ces équerres 223 jouent le rôle de raidisseur.

Au moins deux rails de guidage 224, de préférence trois, sont fixés sur la face avant de la plaque verticale 221, c'est-à-dire la face tournée vers l'avant AV de l'installation. Ces rails de guidage 224 sont verticaux et parallèles entre eux.

La face arrière de la plaque verticale 211 du chariot 210 supporte deux patins de guidage 225 et un organe de verrouillage 226.

Chaque patin 225 est un élément allongé, fixé verticalement sur la plaque 211, et muni d'une gorge verticale 2250. La gorge 2250 est conformée de façon à pouvoir recevoir le rail de guidage 224 situé en regard, et à ce que ce rail 224 puisse coulisser. Les deux patins 225 sont disposés en regard du premier et du troisième rail 224.

L'organe de verrouillage 226 est disposé entre les deux patins 225 et est apte à coopérer avec le rail de guidage 224 central.

Cet organe de verrouillage 226 comprend par exemple trois modules de verrouillage/freinage 2260 superposés, aptes à bloquer le coulissement du deuxième rail 224.

Les patins 225 sont également munis d'au moins un module de verrouillage/freinage 2251 apte à bloquer le coulissement des rails de guidage 224 latéraux.

Les moyens de déplacement vertical 22 comprennent en outre un vérin hydraulique ou pneumatique 227, à double effet, visible sur la figure 3.

Ce vérin comprend un corps 2271 et une tige 2272. Le corps 2271 est solidaire des moyens 21 de déplacement horizontal, il est fixé par exemple par sa partie supérieure à la plaque horizontale 212. La tige 2272 est fixée aux moyens de déplacement 22, par exemple sur la face supérieure de la plaque horizontale 222. Le montage inverse est également possible.

L'actionnement de ce vérin 227 permet de déplacer le chariot 220 verticalement, par rapport au chariot 210, selon une direction Z-Z", perpendiculaire à X-X' et ce, dans deux sens opposés, à savoir vers le haut (sens ZA) et vers le bas (sens ZB).

Comme cela sera expliqué plus en détail ci-après, ce déplacement vertical permet de venir piquer la bande de roulement B, ou au contraire de séparer les modules 3 de celle-ci.

Le pilotage du dispositif 2 et des moyens 21 de déplacement horizontal et 22 de déplacement vertical est assuré par une unité centrale de pilotage 13, représentée uniquement sur la figure 1, qui est par exemple un ordinateur ou un automate programmable.

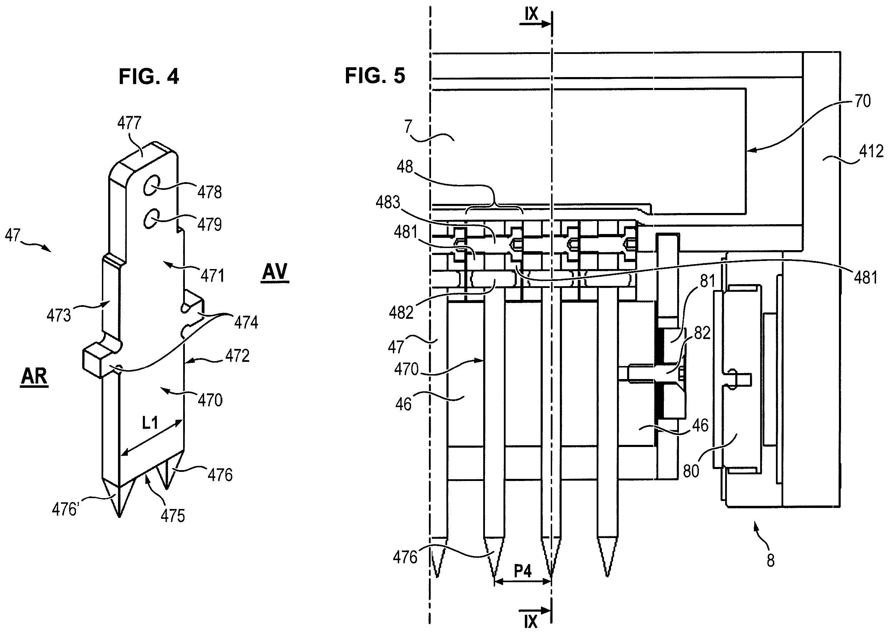

Un exemple de mode de réalisation d'un module de piquage 3 va maintenant être décrit en liaison avec les figures 4 à 10.

Le module de piquage 3 comprend un châssis 4 qui supporte un ensemble de piquage fixe 5 et deux ensembles de piquage « mobile » 6, disposés de part et d'autre de l'ensemble de piquage fixe 5.

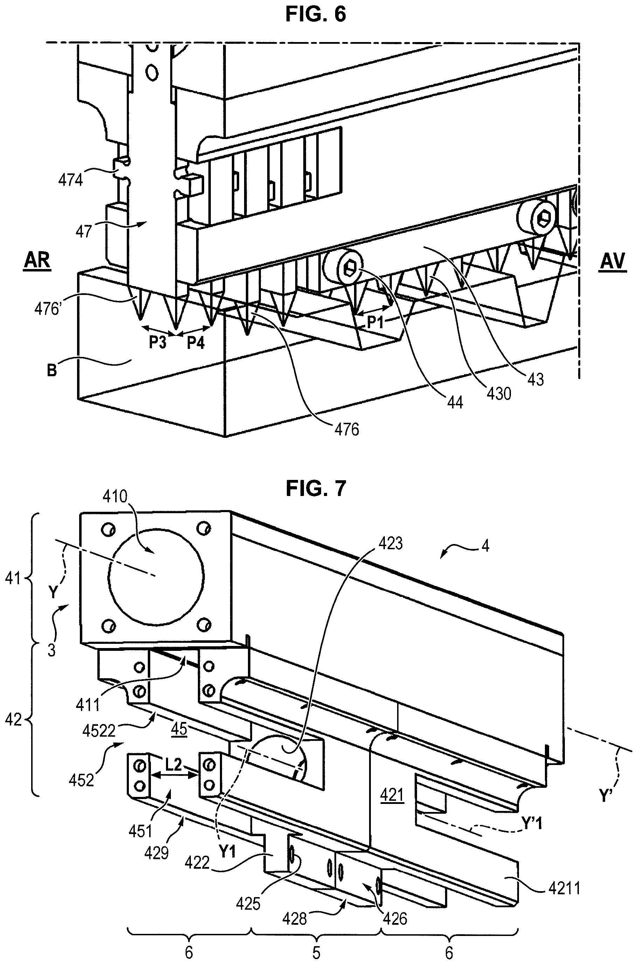

Sur la figure 7, on peut voir que le châssis 4 comprend une partie supérieure 41 et une partie inférieure 42. Ce châssis 4 est de forme allongée et présente un axe longitudinal Y-Y' perpendiculaire à la direction X-X'.

La partie supérieure 41 présente la forme générale d'un parallélépipède rectangle, percé de part en part par un alésage longitudinal 410, de préférence de forme cylindrique, d'axe longitudinal Y-Y'. Cet alésage 410 délimite un logement de réception d'un manchon gonflable 7.

La paroi inférieure de cette partie supérieure 41 est pleine dans sa partie centrale située en regard de l'ensemble de piquage fixe 5 et elle présente de part et d'autre de cette partie centrale, deux fentes longitudinales 411.

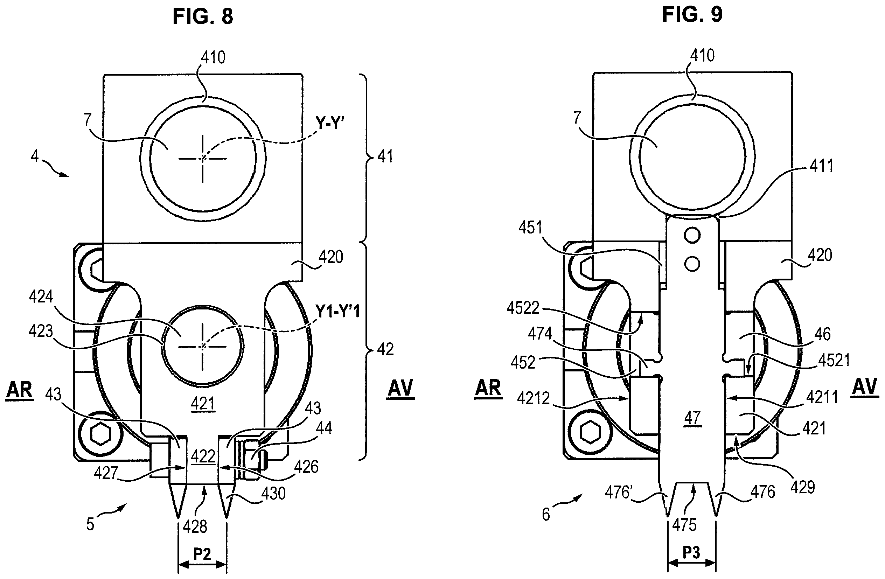

Comme cela apparaît mieux sur la figure 9, chaque fente 411 débouche à sa partie supérieure dans la partie inférieure du logement 410 avec lequel elle est en communication. Les deux fentes 411 sont situées respectivement en regard des deux ensembles de piquage mobile 6.

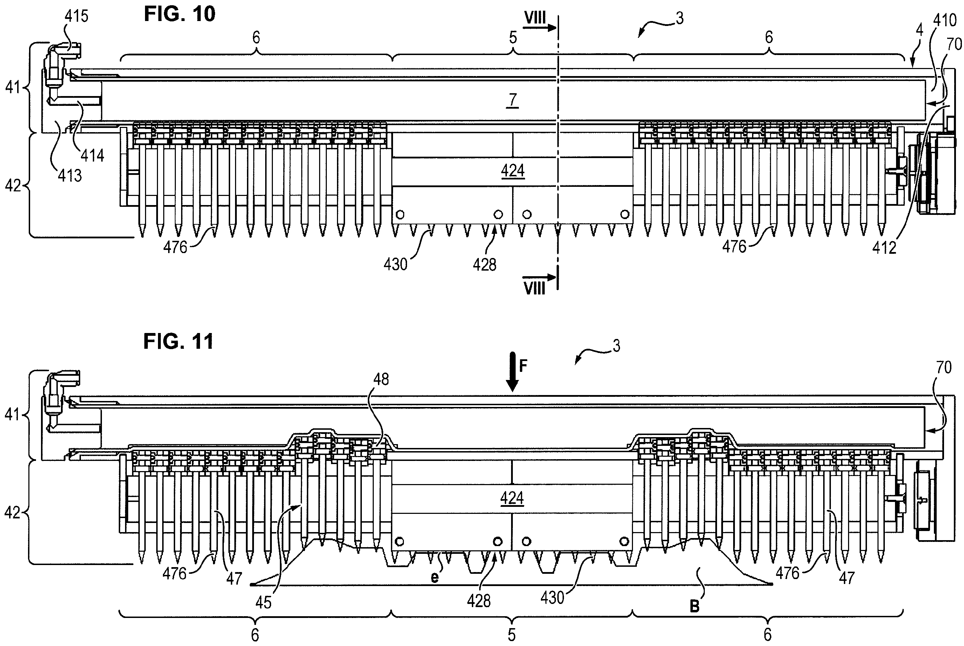

Le logement 410 est obturé à l'une de ses extrémités, ici l'extrémité située à droite de la figure 10, par une paroi verticale 412 qui se prolonge vers le bas en regard de la partie inférieure 42.

Le manchon gonflable 7 est obturé à son extrémité 70 située en regard de la paroi 412. Il est ouvert à son extrémité opposée.

Un bouchon 413 est inséré dans l'embouchure du logement 410 située à l'extrémité opposée à celle obturée par la paroi 412. Ce bouchon 413 vient pincer l'extrémité ouverte du manchon gonflable 7, et ce de façon étanche.

Le bouchon 413 est muni d'un perçage 414, par exemple en forme de L, qui se prolonge à l'extérieur par un raccord 415, ici par exemple un raccord coudé. Le raccord 415 est configuré pour pouvoir être relié à une source d'alimentation en air du manchon 7, non représentée sur les figures. Le manchon 7 peut ainsi être alimenté en air et gonflé.

Comme cela apparaît mieux sur la vue en coupe transversale de la figure 8, la partie inférieure 42 présente, dans sa partie centrale située en regard de l'ensemble de piquage fixe 5, successivement du haut vers le bas, une zone supérieure plus large 420, une zone médiane 421 un peu moins large et une zone inférieure 422 encore moins large que la précédente. Ces différentes zones 420, 421 et 422 ont chacune sensiblement la forme d'un parallélépipède rectangle.

La zone médiane 421 est percée de part en part par un alésage cylindrique 423, qui s'étend selon un axe longitudinal Y1-Y'1 parallèle à l'axe Y-Y' et perpendiculaire à la direction X-X'. Cet alésage 423 permet la réception d'un arbre de poussée cylindrique 424.

Comme cela est visible sur les figures 7 et 8, la zone inférieure 422 est percée de part en part par plusieurs trous 425 perpendiculaires à l'axe Y1-Y'1 et parallèle à la direction X-X'. Ces trous 425 débouchent sur les deux faces opposées avant 426 et arrière 427 de la zone centrale 422. La face inférieure 428 de la zone inférieure 422 constitue une surface de contact horizontale plane.

Comme cela apparait mieux sur les figures 6 et 8, une lamelle plane 43 est fixée contre chaque face 426, respectivement 427, à l'aide d'un assemblage boulon-écrou 44. Chaque lamelle 43 se prolonge à sa partie inférieure par une série de piques 430. Les différentes piques 430 d'une même lamelle 43 sont espacées entre-elles d'un pas dit « premier pas » P1 (mesuré pointe à pointe).

En outre, chaque pique 430 de la première lamelle 43 présente avec la pique 430 de la deuxième lamelle 43, située en regard selon la direction X-X', un pas dit « deuxième pas » P2.

De préférence les pas P1 et P2 sont égaux.

Les lamelles 43 et donc les piques 430 sont solidaires du châssis 4. On dit que cette partie centrale du châssis 4 constitue un ensemble de piquage fixe 5, en ce sens que lesdites piques 430 sont fixes par rapport au châssis 4 du module 3. Ces piques 430 suivent toutefois le mouvement vertical ou horizontal du module 3.

Il serait également possible d'avoir plus de deux rangées de piques 430.

Les deux zones latérales de la partie inférieure 42 du châssis 4, situées en regard des ensembles de piquage mobile 6, vont maintenant être décrites en liaison avec les figures 6, 7 et 9. Elles sont identiques, une seule sera décrite en détails.

A cet endroit, la partie inférieure 42 comprend uniquement la zone supérieure plus large 420 et la zone médiane 421 moins large.

La partie inférieure 42 présente en section transversale, c'est-à-dire dans un plan perpendiculaire à l'axe Y1-Y'1, un logement 45 en forme de croix.

La branche verticale 451 de ce logement en forme de croix 45 s'étend depuis la fente 411 jusqu'à la face inférieure 429 de la zone médiane 421.

La branche horizontale 452 du logement en forme de croix 45 s'étend depuis la face avant 4211 de la zone médiane 421 jusqu'à la face arrière 4212 de celle-ci.

La branche 452 débouche en regard de l'alésage 423.

Comme on peut le voir sur les figures 5, 6 et 9, des garnitures rectangulaires 46 sont insérées dans la branche horizontale 452 du logement en forme de croix 45. Ces garnitures 46, en forme de parallélépipède rectangle sont espacées les unes des autres. Elles sont disposées dans des plans perpendiculaires à l'axe Y1-Y'1.

Une plaquette de piquage 47 est intercalée entre deux garnitures 46 voisines.

Un exemple de réalisation de la plaquette de piquage 47 va maintenant être décrit plus en détail en liaison avec la figure 4.

La plaquette de piquage 47 a une forme générale en croix.

Elle est formée d'une plaque plane 470 plus longue que large et de faible épaisseur, présentant sensiblement la forme d'un parallélépipède rectangle. Cette plaque 470 présente deux faces latérales opposées 471, une face avant 472 et une face arrière 473, dénommées ainsi car orientées respectivement vers l'avant AV et l'arrière AR du dispositif 2 de l'installation 1. Deux bras 474 font saillie de chacune des faces avant 472 et arrière 473, sensiblement à la moitié de la hauteur de celle-ci.

La plaque 470 présente également une face inférieure 475 plane qui se prolonge par deux piques avant 476, arrière 476' espacées entre-elles pointe à pointe d'un pas dit « troisième pas » P3, de préférence égal au deuxième pas P2 (voir figures 6 et 9).

La face 475 constitue une surface de contact horizontale plane, comme cela sera décrit ultérieurement.

La plaque 470 présente également une face supérieure 477, opposée à la face 475. Elle comporte dans sa partie supérieure deux trous, à savoir un trou supérieur 478 et un trou inférieur 479, traversant la plaque 470 de part en part, de façon à déboucher sur chacune de ses faces latérales 471.

La largeur L1 de la plaque 470 de la plaquette 47 correspond, au jeu de coulissement près, à la largeur L2 de la branche verticale 451 (voir figure 7).

La plaquette 47 peut ainsi coulisser verticalement à l'intérieur de la branche 451 qui constitue un espace de guidage vertical.

Les deux bras 474 peuvent se déplacer dans la branche horizontale 452 de la découpe 45.

Les deux branches 474 constituent des butées de limitation de la course verticale de la plaquette 47. Celle-ci peut se déplacer verticalement entre une position basse représentée sur la figure 9 dans laquelle les branches 474 viennent en butée contre la face inférieure 4521 de la branche 452 ménagée dans la zone 421 et une position haute dans laquelle les deux branches 474 viennent en butée contre la face supérieure 4522 de la branche 452.

Afin d'élargir la surface de contact entre la plaquette 47 et le manchon gonflable 7, la plaquette de piquage 47 est avantageusement munie d'une tête de contact 48.

Comme on peut le voir sur la vue de détail de la figure 5, cette tête 48 comprend deux plaquettes rectangulaires 481, fixées respectivement de part et d'autre de la partie supérieure de la plaque 470, et ce, au moyen d'une goupille 482 pénétrant dans le trou 479 et d'une vis 483 pénétrant dans le trou 478.

De préférence, la forme des piques 476, 476' d'une plaquette 47 est identique à la forme des piques 430. De préférence, cette forme est pyramidale. D'autres formes pourraient toutefois être envisagées, dès lors qu'elles permettent de pénétrer facilement dans la bande de roulement en caoutchouc B.

Comme cela est visible sur la figure 6, chaque plaquette de piquage 47 est espacée d'une plaquette 47 voisine, de façon que sa pique orientée vers l'avant soit espacée de la pique voisine orientée vers l'avant, d'un pas dit « quatrième pas » P4, de préférence égal au premier pas P1.

Enfin, comme on le voit mieux sur la figure 5, le châssis 4 est muni d'un vérin de maintien 8. Ce vérin de maintien 8 est porté par la paroi d'extrémité 412. Il peut se déplacer axialement vers la gauche de la figure selon l'axe Y1-Y'1.

Par ailleurs, une plaque de poussée 81 est vissée à l'aide d'une vis 82 sur la dernière garniture 46 qui fait face au vérin 8.

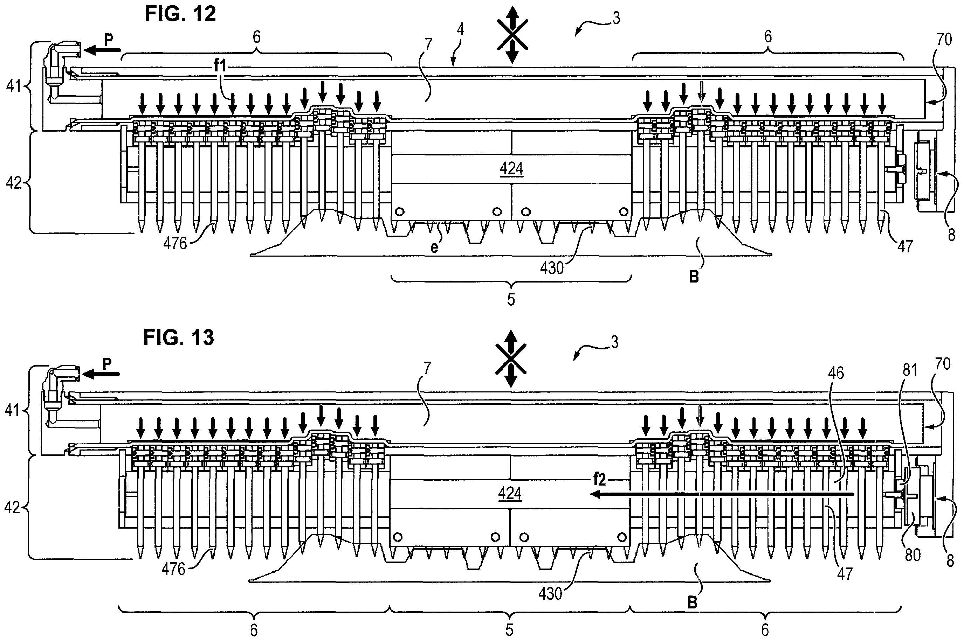

Comme on le voit sur la figure 13, la tête de la tige 80 de ce vérin 8 peut être déplacée axialement de façon à être plaquée contre la plaque de poussée 81, et ce faisant, vient serrer ensemble les différentes garnitures 46 et les plaquettes de piquage 47 intercalées entre celles-ci, de la droite vers la gauche des figures 5 et 13. La dernière garniture 46 de l'ensemble de piquage mobile 6 situé à droite de la figure 13 vient presser contre l'arbre de poussée 424, qui à son tour transmet cette force de serrage aux garnitures 46 et plaquettes 47 de l'ensemble de piquage mobile 6 situé sur la partie gauche de la figure 13.

Le fonctionnement du dispositif automatisé 2 de préhension et de manutention d'une bande de roulement B conforme à l'invention va maintenant être décrite plus en détail en faisant référence notamment aux figures 10 à 13.

On réalise tout d'abord une série d'étapes consistant en un cycle de « mise au profil ». Ce cycle a pour but de régler le dispositif automatisé de préhension 2, de façon à acquérir le profil de la bande de roulement B à déplacer.

Initialement, la bande de roulement B est présente sur le tapis de déplacement linéaire 11, comme représenté sur la figure 1. Le dispositif 2 est positionné au-dessus de l'extrémité arrière de la bande de roulement, à distance de celle-ci. A ce stade, le manchon gonflable 7 n'est pas alimenté en air, le vérin de poussée 8 n'est pas non plus alimenté et les plaquettes de piquage 47, sous l'action de leur propre poids, sont en position basse à l'intérieur de l'espace de guidage vertical 45. Ceci correspond à la situation représentée sur la figure 10.

Ensuite, comme représenté sur la figure 11, le vérin 227, des moyens 22 de déplacement vertical est actionné, de façon à appliquer les modules de piquage 3 contre la bande de roulement B, avec une force F.

La descente est poursuivie jusqu'à ce que la surface de butée 428 vienne au contact du point le plus haut du profil de la bande de roulement B située en regard. Les piques « fixes » 430 pénètrent à l'intérieur de la bande de roulement B avec laquelle elles sont en prise. Le manchon gonflable 7 n'est toujours pas alimenté en air et le vérin de poussée 8 n'est pas actionné.

Comme on peut le voir sur les parties gauche et droite de la figure 11, les plaquettes de piquage 47 viennent au contact du profil de la bande de roulement B et remontent librement à l'intérieur de l'espace 45 de guidage vertical, de façon non maîtrisée. Le piquage réalisé par ces plaquettes de piquage 47 n'est donc pas réalisé. Les extrémités 48 supérieures de la plaquette 47 viennent au contact du manchon gonflable 7 et déforment celui-ci.

Comme on peut le voir sur la figure 6, certaines des piques fixes 430 peuvent se trouver en regard d'un creux de la bande de roulement B et donc ne pas être en prise avec celle-ci.

Comme on peut le voir sur la figure 11, la cote « e », représentant le défaut de piquage, doit être supérieure à 0mm et inférieure ou égale à 2mm pour obtenir un piquage efficient de la bande de roulement B.

La force F est composée d'une force f appliquée par le vérin 227 et par le poids global du dispositif automatisé de préhension de manutention 2. Cette force f appliquée par le vérin 227 peut être ajustée en fonction du cycle et/ou du produit, par exemple de la nature du caoutchouc de la bande de roulement B.

Pendant ce cycle de « mise au profil », la force F nécessaire est égale à la force de piquage des piques fixes 430 de toutes les lamelles 43 de tous les ensembles de piquage fixe 5.

Pendant un « cycle de pose » qui sera décrit ultérieurement, la force F nécessaire est égale à la force de piquage de toutes les piques fixes 430 plus la force de piquage des plaquettes mobiles 47 en prise avec la bande de roulement B, pour tous les modules 3.

Au cours d'une troisième étape, représentée sur la figure 12, l'altitude du dispositif 2 et plus précisément des modules de piquage 3 est verrouillée mécaniquement à l'aide de l'organe 226 (figure 2) et des modules de verrouillage/freinage 2251. Le manchon gonflable 7 est alimenté en air comprimé à une pression P. Grâce à cela, une force $f_1$ (voir figure 12) est transmise à chaque plaquette de piquage 47, par le manchon gonflable 7. Le vérin de poussée 8 n'est toujours pas actionné.

Sous l'action de la pression exercée par le manchon gonflable 7, les plaquettes de piquage 47 descendent au contact de la bande de roulement B jusqu'à ce que leurs surfaces de contact 475 prennent appui sur la surface extérieure de la bande de roulement B contre laquelle elles sont plaquées. Cette situation est celle représentée par exemple sur la figure 6, pour la plaquette 47 située le plus à gauche. La prise de la bande de roulement B est alors efficiente.

Les plaquettes mobiles 47 qui sont en regard d'un creux du profilé B restent sous l'action de leur propre poids en butée, les bras 474 reposant contre les faces 4521, comme représenté sur la figure 9.

On notera que la force F exercée par le vérin 227 doit répondre à la formule ci-dessous :

$$F > n \times f_1 \text{ (max)} \times a$$

Avec F = verrouillage mécanique (N)

n = le nombre de plaquettes mobiles 47 par module de piquage 3,

$f_1$ max correspondant à la force maximum par plaquette de piquage (exprimés en N) à la pression maximum admissible par le manchon gonflable 7 (exprimée en N)

avec a = le nombre de modules de piquage 3, par exemple ici au nombre de trois.

Enfin, au cours d'une quatrième étape représentée sur la figure 13, le vérin de poussée 8 est actionné de façon à exercer une force de serrage f2, qui est transmise à la totalité des plaquettes de piquage 47 et aux garnitures 46, en les verrouillant ainsi mécaniquement en altitude, à l'intérieur de l'espace de guidage vertical 45.

Dans cette position, l'altitude des modules de piquage 3 est toujours verrouillée mécaniquement par le vérin 227. De même, la membrane de gonflage 7 reste alimentée en air comprimé à la pression P.

L'arbre de poussée 424 transmet alors la force f2 exercée par le vérin 8 à la partie gauche du système (sur la figure 13) avec :

$$f2 > \frac{f1(\text{max})}{\mu(\text{acier}) \times 2}$$

avec f1 (max) = force maximale exercée par la plaquette de piquage (exprimée en N) à la pression maximale admissible par le manchon de gonflage 7.

$\mu$ (acier) = facteur de frottement entre deux pièces en acier,

2 correspond aux deux surfaces de contact d'une plaquette de piquage 47.

Pendant le « cycle de pose » décrit ci-après, f2 répond à la formule :

$$f2 > \frac{T(\text{max})}{\mu(\text{acier}) \times 2}$$

Avec Tmax = force maximale de traction ou de compression par plaquette en prise avec la bande B (exprimée en N).Enfin, alors que le vérin 227 est toujours actionné pour maintenir la position en altitude des modules de piquage 3 et que le vérin de poussée 8 est toujours actif, le manchon de gonflage 7 n'est plus alimenté en air comprimé.

On obtient ainsi une image en négatif du profil supérieur de la bande de roulement B, par l'agencement des différentes piques fixes et mobiles.

La prise de la bande de roulement B est alors efficace et les moyens 21 de déplacement horizontal des modules de piquage 3 sont alors actionnés de façon à entraîner le dispositif 2 vers l'avant (voir figure 1) jusqu'à ce que la bande de roulement B soit déposée autour de la forme de pose 12.

Le vérin 227 est alors actionné pour que les modules de piquage 3 soient relevés et se séparent de la bande de roulement B, puis les moyens 21 de déplacement horizontal sont actionnés pour ramener le dispositif 2 vers l'arrière, dans sa position d'origine représentée sur la figure 1.

Il est alors possible de commencer un « cycle de pose », avec d'autres bandes de roulement B présentant le même profil que la bande qui a été utilisée pour acquérir le négatif du profil de cette bande de roulement. Alors que les plaquettes de piquage 47 sont toujours figées dans leur position en altitude, le dispositif 2 est de nouveau abaissé pour prendre une nouvelle bande de roulement B et l'emmener vers la forme 12. Cette étape peut être répétée tant que la cote « e » est respectée ou tant que le profil de la bande de roulement B ne change pas.

En revanche, pour manipuler une bande de roulement B présentant un autre profil, le cycle de « mise au profil devra être répété.

## Revendications

1. Dispositif automatisé de préhension et de manutention (2) d'une bande de roulement (B) pour un pneumatique, comprenant

   - au moins un module de piquage (3) de ladite bande de roulement,
   - des moyens (22) de déplacement vertical dudit module de piquage (3),
   - des moyens (21) de déplacement horizontal selon une direction de déplacement horizontal linéaire X-X' dudit module de piquage (3),

   et en ce que ledit module de piquage (3) comprend un châssis (4) muni d'au moins un ensemble de piquage mobile (6) et d'au moins un ensemble de piquage fixe (5),
   ledit ensemble de piquage fixe (5) comprenant une surface de butée (428), horizontale, plane, ménagée à la base dudit châssis (4), et depuis laquelle au moins deux piques (430) font saillie vers le bas,
   ledit ensemble de piquage mobile (6) comprenant :

   - au moins une plaquette de piquage (47) munie à sa base d'au moins une surface de contact (475) horizontale plane, depuis laquelle au moins deux piques (476, 476') font saillie, cette plaquette de piquage (47) étant disposée à l'intérieur d'un espace de guidage vertical (45, 451, 452) ménagé dans ledit châssis (4), de façon que ses piques (476, 476') fassent saillie vers le bas, et cette plaquette (47) étant mobile librement verticalement dans cet espace (45, 451, 452) sur une course limitée,

- un dispositif de déplacement vertical (7) de ladite plaquette (47) du haut vers le bas à l'intérieur dudit espace de guidage vertical (45), et
- un dispositif de verrouillage (8) de la position en altitude de ladite plaquette (47) à l'intérieur dudit espace de guidage vertical (45).

2. Dispositif selon la revendication 1, **caractérisé en ce que** ledit module de piquage (3) comprend sur un même châssis (4), un ensemble de piquage fixe (5) au centre et deux ensembles de piquage mobile (6), disposés de part et d'autre.

3. Dispositif selon l'une des revendications précédentes, **caractérisé en ce que** chaque plaquette de piquage (47) comprend deux piques dites "avant" (476) et "arrière" (476'), séparées l'une de l'autre par ladite surface de contact (475), les sommets de ces deux piques (476, 476') étant espacés d'un pas, dit « troisième pas » (P3).

4. Dispositif selon la revendication 3, **caractérisé en ce que** l'ensemble de piquage mobile (6) comprend au moins deux plaquettes de piquage (47) mobiles, disposées parallèlement et de sorte que l'axe joignant les sommets des deux piques avant (476) et arrière (476') de chaque plaquette (47) soit parallèle à ladite direction de déplacement horizontal X-X' dudit module de piquage (3) et de sorte que les sommets des piques avant (476) des différentes plaquettes (47) soient alignés le long d'un axe perpendiculaire à la dite direction de déplacement X-X' du module (3) et que le sommet de la pique (476) avant d'une plaquette soit espacé du sommet de la pique (476) avant de la plaquette (47) voisine d'un pas dit « quatrième pas » (P4).

5. Dispositif selon l'une des revendications précédentes, **caractérisé en ce que** ladite plaquette de piquage mobile (47) comprend au moins une butée (476) de limitation de sa course dans ses deux sens de déplacement vertical.

6. Dispositif selon l'une des revendications précédentes, **caractérisé en ce que** ledit dispositif de déplacement vertical de ladite plaquette du haut vers le bas comprend :

- un manchon gonflable (7),
- un alésage (410) de réception dudit manchon gonflable (7), ménagé dans une partie supérieure (41) dudit châssis (4), cet alésage (410) présentant à sa base, une fente horizontale (411) qui s'étend perpendiculairement à ladite direction de déplacement horizontal X-X' du module de piquage, cette fente (411) débouchant en haut dudit espace de guidage vertical (45), et ce dernier étant ménagé dans une partie inférieure (42) dudit châssis (4),

- un dispositif de gonflage (413, 414, 415) dudit manchon (7), configuré pour pouvoir être relié à une source d'alimentation en air comprimé,

ladite plaquette de piquage mobile (47) étant disposée à l'intérieur de l'espace de guidage vertical (45), de façon que son extrémité supérieure (477, 481) repose contre le manchon gonflable (7) lorsqu'elle est en position basse et de façon que son extrémité supérieure (477, 481) déforme ledit manchon gonflable (7) lorsqu'elle est à une altitude supérieure à ladite position basse,

ledit manchon gonflable (7) tendant à repousser ladite plaquette (47) vers le bas lorsqu'il est gonflé.

7. Dispositif selon l'une des revendications précédentes, **caractérisé en ce que** ledit châssis (4) comprend dans sa partie inférieure (42), un logement (45), qui présente en section transversale selon un plan parallèle à ladite direction de déplacement horizontal X-X' du module de piquage (3), une forme de croix, qu'il est muni d'une branche horizontale (452) et d'une branche verticale (451), cette dernière débouchant sur la surface inférieure (429) du châssis (14), **en ce que** ladite plaquette (47) de piquage est également en forme de croix (de sorte qu'elle comprend une plaque (470) munie de deux bras (474), **en ce que** ladite plaquette de piquage (47) est disposée dans ledit logement (45) de façon que la plaque (470) puisse coulisser dans la branche verticale (451) et chacun de ses bras (474) dans l'une des branches horizontales (452), les deux bras (474) constituant des butées de limitation de la course de ladite plaquette (47) et **en ce que** des garnitures (46) sont disposées dans la branche horizontale (452) parallèlement les unes aux autres et dans un plan parallèle à celui de ladite direction de déplacement horizontal (X-X') du module de piquage, chaque plaquette de piquage (47) étant intercalée entre deux de ces garnitures (46), le logement (45) délimitant avec deux garnitures voisines (46), ledit espace de guidage vertical de la plaquette de piquage (47).

8. Dispositif selon les revendications 6 et 7, **caractérisé en ce que** le haut de ladite branche verticale (451) du logement en croix (45) débouche dans la fente (411) de l'alésage de réception (410) du manchon gonflable (7).

9. Dispositif selon la revendication 7 ou 8, **caractérisé en ce que** ledit dispositif de verrouillage de la position en altitude de ladite plaquette (47) comprend un vérin de poussée (8) exerçant une poussée axiale selon une direction horizontale perpendiculaire à ladite direction de déplacement horizontale X-X' du module de piquage (3), de façon à serrer ensemble les unes contre les autres lesdites garnitures (46) et ladite au moins une plaquette mobile (47) et à empêcher le déplacement vertical de ladite plaquette de piquage (47), lorsque le vérin de poussée (8) est activé.

10. Dispositif selon l'une des revendications précédentes, **caractérisé en ce qu'**il comprend trois modules de piquage (3) disposés parallèlement les uns aux autres de façon que leurs axes longitudinaux respectifs soient perpendiculaires à la direction de déplacement horizontal X-X' du module de piquage (3).

11. Installation (1) de déplacement d'une bande de roulement (B) pour un pneumatique, **caractérisée en ce qu'**elle comprend :

    - un élément de guidage en translation linéaire (10),
    - un dispositif automatisé de préhension et de manutention d'une bande de roulement pour un pneumatique (2) selon l'une quelconque des revendications précédentes, dont les moyens (21) de déplacement horizontal permettent de déplacer ledit module de piquage (9) le long dudit élément de guidage en translation linéaire (10),
    - un tapis (11) de déplacement linéaire de ladite bande de roulement, disposé sous ledit dispositif automatisé de préhension et de manutention (2), ce tapis (11) permettant le déplacement de la bande de roulement selon une direction horizontale parallèle à ladite direction de déplacement horizontal X-X' dudit module de piquage (3).

12. Installation selon la revendication 11, **caractérisée en ce qu'**elle comprend en outre une forme de pose (12) apte à recevoir ladite bande de roulement (B) à la sortie dudit tapis de déplacement (11).

**Patentansprüche**

1. Automatisierte Vorrichtung zum Greifen und Handhaben (2) eines Laufstreifens (B) für einen Reifen, welche umfasst:

    - wenigstens ein Modul zum Anstechen (3) des Laufstreifens;
    - Mittel (22) zur vertikalen Verlagerung des Anstechmoduls (3),
    - Mittel (21) zur horizontalen Verlagerung des Anstechmoduls (3) in einer geradlinigen horizontalen Verlagerungsrichtung X-X',

und dadurch, dass das Anstechmodul (3) ein Gestell (4) umfasst, das mit wenigstens einer beweglichen Anstechanordnung (6) und wenigstens einer festen Anstechanordnung (5) versehen ist,# wobei die feste Anstechanordnung (5) eine ebene, horizontale Anschlagfläche (428) umfasst, die an der Unterseite des Gestells (4) ausgebildet ist und von der aus wenigstens zwei Stachel (430) nach unten vorstehen, wobei die bewegliche Anstechanordnung (6) umfasst:

    - wenigstens ein Anstechplättchen (47), das an seiner Unterseite mit wenigstens einer ebenen, horizontalen Kontaktfläche (475) versehen ist, von der aus wenigstens zwei Stacheln (476, 476') vorstehen, wobei dieses Anstechplättchen (47) im Inneren eines in dem Gestell (4) ausgebildeten Raumes zur vertikalen Führung (45, 451, 452) angeordnet ist, derart, dass seine Stacheln (476, 476') nach unten vorstehen, und wobei dieses Plättchen (47) in diesem Raum (45, 451, 452) auf einer begrenzten Weglänge vertikal frei beweglich ist,
    - eine Vorrichtung zur vertikalen Verlagerung (7) des Plättchens (47) im Inneren des Raumes zur vertikalen Führung (45) von oben nach unten, und
    - eine Vorrichtung zur Verriegelung (8) der Höhenposition des Plättchens (47) im Inneren des Raumes zur vertikalen Führung (45).

2. Vorrichtung nach Anspruch 1, **dadurch gekennzeichnet, dass** das Anstechmodul (3) an ein und demselben Gestell (4) eine feste Anstechanordnung (5) in der Mitte und zwei bewegliche Anstechanordnungen (6), die beiderseits davon angeordnet sind, umfasst.

3. Vorrichtung nach einem der vorhergehenden Ansprüche, **dadurch gekennzeichnet, dass** jedes Anstechplättchen (47) zwei Stacheln umfasst, "vorderer" (476) und "hinterer" (476') Stachel genannt, die durch die Kontaktfläche (475) voneinander getrennt sind, wobei die Spitzen dieser zwei Stacheln (476, 476') um einen Abstand beabstandet sind, der "dritter Abstand" (P3) genannt wird.

4. Vorrichtung nach Anspruch 3, **dadurch gekennzeichnet, dass** die bewegliche Anstechanordnung (6) wenigstens zwei bewegliche Anstechplättchen (47) umfasst, die parallel angeordnet sind, und derart, dass die Achse, welche die Spitzen der zwei Stacheln, des vorderen (476) und des hinteren (476'), jedes Plättchens (47) verbindet, parallel zur horizontalen Verlagerungsrichtung X-X' des Anstechmoduls (3) ist, und derart, dass die Spitzen der vorderen Stacheln (476) der verschiedenen Plättchen (47) entlang einer zu der Verlagerungsrichtung X-X' des Moduls (3) senkrechten Achse ausgerichtet sind, und dass die Spitze des vorderen Stachels (476) eines Plättchens von der Spitze des vorderen Stachels (476) des benachbarten Plättchens (47) um einen Abstand beabstandet ist, der "vierter Abstand" (P4) genannt wird.

5. Vorrichtung nach einem der vorhergehenden Ansprüche, **dadurch gekennzeichnet, dass** das bewegliche Anstechplättchen (47) wenigstens einen Anschlag (476) zur Begrenzung seines Weges in seinen beiden Richtungen der vertikalen Verlagerung umfasst.

6. Vorrichtung nach einem der vorhergehenden Ansprüche, **dadurch gekennzeichnet, dass** die Vorrichtung zur vertikalen Verlagerung des Plättchens von oben nach unten umfasst:

   - eine aufblasbare Manschette (7),
   - eine Bohrung (410) zur Aufnahme der aufblasbaren Manschette (7), die in einem oberen Teil (41) des Gestells (4) ausgebildet ist, wobei diese Bohrung (410) an ihrer Unterseite einen horizontalen Schlitz (411) aufweist, welcher sich senkrecht zur horizontalen Verlagerungsrichtung X-X' des Anstechmoduls erstreckt, wobei dieser Schlitz (411) in den oberen Teil des Raumes zur vertikalen Führung (45) mündet, und wobei dieser Letztere in einem unteren Teil (42) des Gestells (4) ausgebildet ist,
   - eine Vorrichtung zum Aufblasen (413, 414, 415) der Manschette (7), die dafür ausgelegt ist, mit einer Versorgungsquelle für Druckluft verbunden werden zu können,

   wobei das bewegliche Anstechplättchen (47) im Inneren des Raumes zur vertikalen Führung (45) derart angeordnet ist, dass sein oberes Ende (477, 481) an der aufblasbaren Manschette (7) anliegend ruht, wenn es sich in der unteren Position befindet, und derart, dass sein oberes Ende (477, 481) die aufblasbare Manschette (7) verformt, wenn es sich auf einer Höhe befindet, die höher als die untere Position ist,
   wobei die aufblasbare Manschette (7) bestrebt ist, das Plättchen (47) nach unten zurückzuschieben, wenn sie aufgeblasen wird.

7. Vorrichtung nach einem der vorhergehenden Ansprüche, **dadurch gekennzeichnet, dass** das Gestell (4) in seinem unteren Teil (42) eine Aufnahme (45) umfasst, welche im Querschnitt entlang einer zu der horizontalen Verlagerungsrichtung X-X' des Anstechmoduls (3) parallelen Ebene die Form eines Kreuzes aufweist, welches mit einem horizontalen Balken (452) und einem vertikalen Balken (451) versehen ist, wobei dieser Letztere auf der Innenfläche (429) des Gestells (14) mündet, dadurch, dass das Anstechplättchen (47) ebenfalls in Form eines Kreuzes ausgebildet ist, derart, dass es eine mit zwei Armen (474) versehene Platte (470) umfasst, dadurch, dass das Anstechplättchen (47) so in der Aufnahme (45) angeordnet ist, dass die Platte (470) in dem vertikalen Balken (451) und jeder ihrer Arme (474) in einem der horizontalen Balken (452) gleiten kann, wobei die zwei Arme (474) Anschläge zur Begrenzung des Weges des Plättchens (47) bilden, und dadurch, dass Beläge (46) in dem horizontalen Balken (452) parallel zueinander und in einer Ebene, die zu derjenigen der horizontalen Verlagerungsrichtung (X-X') des Anstechmoduls parallel ist, angeordnet sind, wobei jedes Anstechplättchen (47) zwischen zwei von diesen Belägen (46) eingefügt ist, wobei die Aufnahme (45) mit zwei benachbarten Belägen (46) den Raum zur vertikalen Führung des Anstechplättchens (47) begrenzt.

8. Vorrichtung nach den Ansprüchen 6 und 7, **dadurch gekennzeichnet, dass** der obere Teil des vertikalen Balkens (451) der kreuzförmigen Aufnahme (45) in den Schlitz (411) der Aufnahmebohrung (410) der aufblasbaren Manschette (7) mündet.

9. Vorrichtung nach Anspruch 7 oder 8, **dadurch gekennzeichnet, dass** die Vorrichtung zur Verriegelung der Höhenposition des Plättchens (47) einen Druckzylinder (8) umfasst, der einen axialen Schub in einer horizontalen Richtung ausübt, die zu der horizontalen Verlagerungsrichtung X-X' des Anstechmoduls (3) senkrecht ist, so dass die Beläge (46) und das wenigstens eine bewegliche Plättchen (47) gegeneinander gedrückt werden und die vertikale Verlagerung des Anstechplättchens (47) verhindert wird, wenn der Druckzylinder (8) aktiviert ist.

10. Vorrichtung nach einem der vorhergehenden Ansprüche, **dadurch gekennzeichnet, dass** sie drei Anstechmodule (3) umfasst, die parallel zueinander so angeordnet sind, dass ihre jeweiligen Längsachsen senkrecht zur horizontalen Verlagerungsrichtung X-X' des Anstechmoduls (3) sind.

11. Anlage (1) zur Verlagerung eines Laufstreifens (B) für einen Reifen, **dadurch gekennzeichnet, dass** sie umfasst:

   - ein Führungselement für geradlinige Translation (10) ,
   - eine automatisierte Vorrichtung zum Greifen und Handhaben eines Laufstreifens für einen Reifen (2) nach einem der vorhergehenden Ansprüche, deren Mittel (21) zur horizontalen Verlagerung es ermöglichen, das Anstechmodul (9) entlang des Führungselements für geradlinige Translation (10) zu verlagern,
   - ein Transportband (11) zur geradlinigen Verlagerung des Laufstreifens, das unter der automatisierten Vorrichtung zum Greifen und Handhaben (2) angeordnet ist, wobei dieses Transportband (11) die Verlagerung des Laufstreifens in einer horizontalen Richtung ermöglicht, die zu der horizontalen Verlagerungsrichtung X-X' des Anstechmoduls (3) parallel ist.

12. Anlage nach Anspruch 11, **dadurch gekennzeichnet, dass** sie außerdem eine Ablageform (12) umfasst, die geeignet ist, den Laufstreifen (B) am Ausgang des Transportband zur Verlagerung (11) aufzunehmen.


**Claims**

1. Automated device (2) for gripping and handling a tread (B) for a tyre, **characterized in that** it comprises:

   - at least one module (3) for pricking said tread,
   - means (22) for moving said pricking module (3) vertically,
   - means (21) for moving said pricking module (3) horizontally in a linear direction of horizontal movement X-X',

   and **in that** said pricking module (3) comprises a frame (4) provided with at least one movable pricking assembly (6) and at least one fixed pricking assembly (5), said fixed pricking assembly (5) comprising a flat, horizontal abutment surface (428) formed at the base of said frame (4), at least two spikes (430) projecting downward from said surface, said movable pricking assembly (6) comprising:

   - at least one pricking plate (47) provided at its base with at least one flat horizontal contact surface (475) from which at least two spikes (476, 476') project, this pricking plate (47) being disposed inside a vertical guiding space (45, 451, 452) formed in said frame (4), such that the spikes (476, 476') thereof project downward, and this plate (47) being freely movable vertically in this space (45, 451, 452) over a limited travel,
   - a device (7) for moving said plate (47) vertically from top to bottom inside said vertical guiding space (45), and
   - a device (8) for locking the height position of said plate (47) inside said vertical guiding space (45).

2. Device according to Claim 1, **characterized in that** said pricking module (3) comprises, on one and the same frame (4), a fixed pricking assembly (5) at the centre and two movable pricking assemblies (6) disposed on either side.

3. Device according to either of the preceding claims, **characterized in that** each pricking plate (47) comprises two spikes known as the "front" spike (476) and the "rear" spike (476'), which are separated from one another by said contact surface (475), the tips of these two spikes (476, 476') being spaced apart by a spacing known as "third spacing" (P3).

4. Device according to Claim 3, **characterized in that** the movable pricking assembly (6) comprises at least two movable pricking plates (47), which are disposed in parallel and in such a way that the axis connecting the tips of the front spike (476) and rear spike (476') of each plate (47) is parallel to said direction of horizontal movement X-X' of said pricking module (3) and in such a way that the tips of the front spikes (476) of the different plates (47) are aligned along an axis perpendicular to said direction of movement X-X' of the module (3) and that the tip of the front spike (476) of a plate is spaced apart from the tip of the front spike (476) of the neighbouring plate (47) by a spacing known as "fourth spacing" (P4).

5. Device according to one of the preceding claims, **characterized in that** said movable pricking plate (47) comprises at least one stop (476) for limiting its travel in its two directions of vertical movement.

6. Device according to one of the preceding claims, **characterized in that** said device for moving said plate vertically from top to bottom comprises:

   - an inflatable sleeve (7),
   - a bore (410) for receiving said inflatable sleeve (7), formed in an upper part (41) of said frame (4), this bore (410) having, at its bottom, a horizontal slot (411) that extends perpendicularly to said direction of horizontal movement X-X' of the pricking module, this slot (411) leading out above said vertical guiding space (45), and the latter being formed in a lower part (42) of said frame (4),
   - a device (413, 414, 415) for inflating said sleeve (7), configured to be able to be connected to a compressed air supply,

   said movable pricking plate (47) being disposed inside the vertical guiding space (45) such that its upper end (477, 481) rests against the inflatable sleeve (7) when it is in its bottom position and such that its upper end (477, 481) deforms said inflatable sleeve (7) when it is at a height greater than said bottom position, said inflatable sleeve (7) tending to push said plate (47) back downward when it is inflated.

7. Device according to one of the preceding claims, **characterized in that** said frame (4) comprises, in its lower part (42), a housing (45), which has a cross shape in cross section in a plane parallel to said direction of horizontal movement X-X' of the pricking module (3), i.e. is provided with a horizontal leg (452) and with a vertical leg (451), the latter leading onto the lower surface (429) of the frame (14), **in that** said pricking plate (47) is likewise cross-shaped, such that it comprises a plate (470) provided with two arms (474), **in that** said pricking plate (47) is disposed in said housing (45) such that the plate (470) can slide in the vertical leg (451) and each of its arms (474) can slide in one of the horizontal legs (452), the two arms (474) forming stops for limiting the travel of said plate (47), and **in that** fittings (46) are disposed in the horizontal leg (452) in a manner parallel to one another and in a plane parallel to that of said direction of horizontal movement (X-X') of the pricking module, each pricking plate (47) being interposed between two of these fittings (46), the housing (45) delimiting, with two adjacent fittings (46), said vertical guiding space of the pricking plate (47).

8. Device according to Claims 6 and 7, **characterized in that** the top of said vertical leg (451) of the cross-shaped housing (45) leads into the slot (411) of the receiving bore (410) of the inflatable sleeve (7).

9. Device according to Claim 7 or 8, **characterized in that** said device for locking the height position of said plate (47) comprises a thrust cylinder (8) that applies axial thrust in a horizontal direction perpendicular to said horizontal direction of movement X-X' of the pricking module (3), so as to clamp said fittings (46) and said at least one movable plate (47) together and to prevent the vertical movement of said pricking plate (47), when the thrust cylinder (8) is activated.

10. Device according to one of the preceding claims, **characterized in that** it comprises three pricking modules (3) that are disposed parallel to one another such that their respective longitudinal axes are perpendicular to the direction of horizontal movement X-X' of the pricking module (3).

11. Installation (1) for moving a tread (B) for a tyre, **characterized in that** it comprises:

    - an element (10) for guiding in linear translation,
    - an automated device (2) for gripping and handling a tread for a tyre according to any one of the preceding claims, the horizontal movement means (21) of which make it possible to move said pricking module (9) along said element (10) for guiding in linear translation,
    - a belt (11) for linearly moving said tread, said belt (11) being disposed under said automated gripping and handling device (2), this belt (11) allowing the tread to be moved in a horizontal direction parallel to said direction of horizontal movement X-X' of said pricking module (3).

12. Installation according to Claim 11, **characterized in that** it also comprises a laying form (12) that is able to receive said tread (B) at the end of said moving belt (11)

FIG. 1

# FIG. 2

FIG. 3

FIG. 5

FIG. 4

## FIG. 6

## FIG. 7

**FIG. 9**

**FIG. 8**

FIG. 10

FIG. 11

EP 3 619 005 B1

FIG. 12

FIG. 13

**RÉFÉRENCES CITÉES DANS LA DESCRIPTION**

**Documents brevets cités dans la description**

- WO 2007138374 A
- EP 2931509 A
- WO 2014090983 A